(19)

**Europäisches Patentamt**
**European Patent Office**
**Office européen des brevets**

(11) **EP 1 567 450 B1**

(12) **EUROPEAN PATENT SPECIFICATION**

(45) Date of publication and mention
of the grant of the patent:
**20.08.2008 Bulletin 2008/34**

(51) Int Cl.:
*C01F 7/02* (2006.01)          *C09C 1/40* (2006.01)
*C08K 3/22* (2006.01)

(21) Application number: **03778747.0**

(22) Date of filing: **03.12.2003**

(86) International application number:
**PCT/JP2003/015472**

(87) International publication number:
**WO 2004/050556 (17.06.2004 Gazette 2004/25)**

(54) **ALUMINUM HYDROXIDE AND METHOD FOR PRODUCTION THEREOF**

ALUMINIUMHYDROXID UND ZUGEHÖRIGES HERSTELLUNGSVERFAHREN

HYDROXYDE D'ALUMINIUM ET PROCEDE DE PRODUCTION DE CET HYDROXYDE D'ALUMINIUM

(84) Designated Contracting States:
**AT BE BG CH CY CZ DE DK EE ES FI FR GB GR HU IE IT LI LU MC NL PT RO SE SI SK TR**

(30) Priority: **05.12.2002 JP 2002353504**
**05.12.2002 JP 2002353506**

(43) Date of publication of application:
**31.08.2005 Bulletin 2005/35**

(73) Proprietor: **Showa Denko K.K.**
**Tokyo 105-8518 (JP)**

(72) Inventor: **ONISHI, Akira**
**c/o SHOWA DENKO K.K. Yokohama Plant**
**Yokohama-shi,**
**Kanagawa 221-0024 (JP)**

(74) Representative: **Strehl Schübel-Hopf & Partner**
**Maximilianstrasse 54**
**80538 München (DE)**

(56) References cited:
**EP-A- 0 589 432          WO-A-01/00529**
**WO-A-03/000591          WO-A-03/000803**
**US-A- 5 130 113**

- **PATENT ABSTRACTS OF JAPAN vol. 017, no. 367 (C-1082), 12 July 1993 (1993-07-12) -& JP 05 058623 A (NIPPON LIGHT METAL CO LTD), 9 March 1993 (1993-03-09)**

**Description**

Technical Field:

The present invention relates to a method for the production of aluminum hydroxide that is utilized as flame-retardant filler for plastics, rubber, etc. More particularly, the invention relates to a method for the production of aluminum hydroxide that has an extremely small aggregation content and is deintegrated in a primary particle and, when filled in a resin, produces a resin composition excelling in impact strength.

Background Art:

Aluminum hydroxide has heretofore been used extensively as filler to be filled in rubbers and plastics. For example, it has been finding utility as flame retardant in thermoplastic resin, rubber and epoxy resin and as toning filler in thermosetting resins, such as unsaturated polyester resin and acrylic resin.

When aluminum hydroxide is used as flame retardant, the degree with which the flame-retardant property of a given resin is improved by the addition of the flame retardant increases in accordance as the concentration of added aluminum hydroxide in the resin is heightened. The rise in the filling factor, however, entails such problems as deteriorating the formability and exalting the kneading torque of the resin. It as well gives rise to such problems as raising the molding temperature and suffering part of aluminum hydroxide to yield to dehydration and expansion (foaming).

When aluminum hydroxide is used as filler, it lowers the strength, particularly the impact strength, of the molded article of resin because it lacks a reinforcing effect. For the sake of repressing the degradation of the impact strength, it is commended to decrease the particle diameter of the aluminum hydroxide as much as possible. Though it is not impossible to obtain aluminum hydroxide having a minute particle diameter by precipitation, it is difficult for the aluminum hydroxide to be filled in a large amount as filler because it assumes the form of secondary aggregate particles resulting from copious aggregation of primary particles and, therefore, has a very large capacity for absorbing oil.

Thus, aluminum hydroxide particles having diameters in the approximate range of 50 to 150 $\mu$m that are pulverized by the use of a ball mill or other similar pulverizer to the degree of primary particles are generally used.

Pulverizing aluminum hydroxide to a stated particle diameter performed through pulverization requires a huge amount of energy. The aluminum hydroxide, when pulverized, suffers its primary particles to break, forms a rough surface and shed chippings and induces the produced powder to increase its specific surface area. The pulverized aluminum hydroxide consequently incurs difficulty in being highly filled in a resin because of deteriorated compatibility with the resin and heightened viscosity. Particularly in the case of a thermosetting resin, the curing time is elongated.

Solely by the pulverization, particles of uniform diameters are not easily obtained and comparatively coarse aggregated particles (unpulverized particles) are suffered to persist It has been ascertained that such unpulverized particles constitute origins for breakage and result in degrading the impact strength while the powder is filled in a resin. For the sake of removing such unpulverized particles, a method for separating them as by air classification or screening subsequent to the pulverization has been in popular use. These separating operations, however, are not economical because they inevitably call for a huge initial equipment investment.

Thus, various methods that are directed toward obtaining aluminum hydroxide having a uniform stated particle diameter have been suggested.

JP-B HEI 5-4336 discloses a method that restrains particles from being coarsened by exerting a large centrifugal force on the particles by the use of a continuous centrifugal separator, thereby deintegrating secondary aggregated particles without breaking the primary particles.

This method limits the primary particle diameter of aluminum hydroxide subjected to the exertion of centrifugal force to the range of 1 to 4 $\mu$m. It is reported that when the diameter exceeds 4 $\mu$m, the effect of deintegrating by virtue of the centrifugal force is not sufficient for deintegrating secondary aggregated particles. This method has never been usable for a wide range of applications.

JP-B SHO 62-9256 discloses an idea of obtaining aluminum hydroxide having a primary particle form or a roundish crystal form by exposing solid aluminum hydroxide to Bayer's extraction agent heated in advance to an elevated temperature.

This method, however, is at a disadvantage in requiring a long time for the exposure and suffering the efficiency of production to be degraded because the solution of aluminum hydroxide proceeds during the course of the exposure.

JP-A HEI 9-208740 discloses a method for effecting surface solution and reduction of specific surface area by preparatorily pulverizing secondary aggregate particles in aluminum hydroxide by the use of a dry impact pulverizer, then converting the resultant aluminum hydroxide into slurry in a sodium aluminate solution of a specific alkali concentration and elevating the temperature of the slurry.

This method, however, has the problem of elongating the process and increasing the cost of production as well because it requires the aluminum hydroxide to be filtered and dried so as to enable it to be preparatorily dry-pulverized.

JP 5058623 discloses an aluminum hydroxide having an average secondary particle diameter of 6-16$\mu$m and a narrow particle size distribution and a method for producing it.

US 5,130,113 discloses an aluminum hydroxide having a particle size of 2 to 30 $\mu$ and having a small specific surface area and low resin filling viscosity and a method for producing it.

An object of the present invention is to provide aluminum hydroxide that has an extremely small aggregation content and is deintegrated in a primary particle and, when filled in a resin, produces highly efficiently a resin composition excelling in impact strength and to provide a method for the production of the aluminum hydroxide.

Disclosure of the Invention:

The present invention provides a method for the production of aluminum hydroxide, comprising the step of suspending aluminum hydroxide obtained by the Bayer process in a sodium aluminate solution to obtain a slurry which has a ratio $A/C$ of 0.4 or less, wherein $A$ represents an alumina concentration (g/liter) and $C$ represents a sodium hydroxide concentration (g/liter) in the sodium aluminate solution, and the step of elevating a temperature of the slurry from 60°C or less to 90°C or more , wherein in the step of elevating the temperature, a time H taken to elevate the temperature of the slurry from 60°C or less to 90°C or more is 15 minutes or less.

The method preferably further comprises the step of retaining the slurry, after the step of The comprises the step of retaining the slurry, after the step of elevating the temperature of the slurry, at a temperature of 85°C or more for at least (15 - H) minutes.

In the method, the aluminum hydroxide preferably has a ratio of solubility by elevating the temperature represented by the general formula: ratio of solubility (%) = $C$ before elevating the temperature x ($A/C$ after elevating the temperature $-A/C$ before elevating the temperature) x 1.53/aluminum hydroxide concentration of the slurry before elevating the temperature x 100, wherein $A$ represents an alumina concentration (g/liter) and $C$ represents a sodium hydroxide concentration (g/liter) in the sodium aluminate solution, which ratio is less than 30%.

Preferably, the method further comprises the step of using a continuous centrifugal separator to exert centrifugal force to the slurry subsequent to the step of elevating the temperature of the slurry. The centrifugal force is preferably 300 G or more.

In the method, the step of elevating the temperature is preferably carried out using a double-tube heat exchanger.

The method of the present invention preferably provides an aluminum hydroxide having an average particle diameter $D$ in a range of 1 to 10 $\mu$m, a BET specific surface area $S$ of 1.5 m$^2$/g or less, a degree of aggregation $D/Dbet$ of less than 3, wherein $Dbet$ stands for a particle diameter calculated by spherical approximation from the BET specific surface area $S$ as $Dbet = 6(S$ x p), in which p denotes a specific gravity of the aluminum hydroxide, and a content of particles having diameters exceeding 20 $\mu$m that is 0.5% or less by mass. The content of particles having diameters exceeding 20 $\mu$m is preferably 0.1% or less by mass.

The aluminum hydroxide produced by the present invention can be used for a composition comprising the aluminum hydroxide as filler.

The composition comprises a matrix material of at least one of rubber and plastic.

The aluminum hydroxide produced by the method of the present invention has an extremely small aggregation content and is deintegrated in a primary particle. When the step of exerting centrifugal force on the slurry is adopted after elevating the temperature, the aluminum hydroxide obtained has a further extremely small aggregation content When the aluminum hydroxide particles are filled in a resin, a resin composition excelling in impact strength can be obtained.

Best Mode for carrying out the Invention:

The present inventors have pursued a diligent study with the object of obtaining aluminum hydroxide that has an extremely small aggregation content and is deintegrated in a primary particle form and have consequently found that ideal monocrystalline aluminum hydroxide having a low specific surface area suitable for use as filler is obtained by combining a step of causing the temperature of slurry having aluminum hydroxide suspended in a specific sodium aluminate solution to be elevated under specific conditions and a step of subsequently exerting centrifugal force on the slurry, thereby concentrating the solids in the slurry and deintegrating the secondary coagulated particles as well. This invention has been perfected as a result

This invention is directed toward providing a method for the production of aluminum hydroxide as defined in claim 1.

At the step of elevating the temperature in this invention, the grain boundaries of secondary aggregated particles crystallographically deficient in binding force are selectively dissolved, and the second aggregated particles are deintegrated by exerting thermal shock to the aluminum hydroxide in the slurry having the aluminum hydroxide obtained by the Bayer process suspended in a sodium aluminate solution.

That is to say, at the step of elevating the temperature, the temperature of the slurry before elevating the temperature is 60°C or less, preferably 55°C or less. If the temperature is higher than 60°C, the excess will be at a disadvantage in preventing exertion of thermal shock large enough to effect selective solution of only the grain boundaries during the course of elevating the temperature.

The temperature of the slurry after elevating the temperature is 90°C or more, preferably 95°C or more, and more preferably 97°C or more. If this temperature falls short of 90°C, the shortage will be at a disadvantage in preventing exertion of heat shock large enough to effect selective solution of only grain boundaries, suffering the aggregated particles to survive and roughening the surface of particles.

Incidentally, the boiling point of the sodium aluminate solution cannot be restricted because it varies with the concentration of sodium hydroxide. In the case of the sodium aluminate solution that is used in the Bayer process, however, it is about 104°C.

The ratio $A/C$, wherein $A$ denotes the concentration (g/liter) of alumina ($Al_2O_3$) in the sodium aluminate solution and $C$ denotes concentration (g/liter) of sodium hydroxide (NaOH) before elevating the temperature, is 0.4 or less as mentioned above. It is preferably 0.35 or less and more preferably 0.3 or less. If the ratio $A/C$ is higher than 0.4, the excess will be at a disadvantage in preventing solution of the alumina portion necessary for loosing grain boundaries and suffering the aggregated particles to survive.

The time required in elevating the temperature of the slurry from 60°C or less to 90°C or more is inside of 15 minutes, preferably inside of 10 minutes, and more preferably inside of 5 minutes. If this time is longer than 15 minutes, the excess will be at a disadvantage in preventing exertion of heat shock large enough for effecting selective solution of only grain boundaries, suffering the aggregated particles to persist and suffering the solution of the whole particles to proceed.

The method for heating the slurry from a temperature of 60°C or less to a temperature of 90°C or more is not particularly restricted. The temperature may be elevated linearly, or moderately in the initial stage and quickly in the final stage, or vice versa. The lower limit to this duration of elevating the temperature is not particularly restricted. The step of elevating the temperature may be made quickly.

After the temperature of the slurry has been elevated to the final level mentioned above, the slurry is retained under the specific conditions that depend on the duration of elevating the temperature. Within the range of the duration of elevating the temperature that is inside of 15 minutes, the duration of the retention increases in accordance as the duration of elevating the temperature decreases. In the method of this invention, the duration of the retention is at least (15 - H) minutes when the time spent for elevating the temperature is H minutes that fall inside of 15 minutes. When the duration of elevating the temperature is 15 minutes, therefore, the method may dispense with the step of retention. The temperature of retention after elevating the temperature is preferably 85°C or more and preferably 90°C or more. If the temperature of this retention falls short of 85°C, the shortage will be at a disadvantage in inducing the separated particles to aggregate again. The upper limit to the temperature of retention is generally the boiling point of the sodium aluminate solution.

The device for elevating the temperature to be used at the step of elevating the temperature is preferred to be a double-tube heat exchanger.

The ratio of solubility of the aluminum hydroxide owing to the step of elevating the temperature in the method of this invention is properly less than 30%, preferably less than 25%. If the ratio of solubility is larger than 30%, the excess will be at a disadvantage in lowering the yield of aluminum hydroxide and degrading the efficiency of production.

The ratio of solubility of the aluminum hydroxide due to the step of elevating the temperature is defined by the general formula:

$$\text{Ratio of solubility (\%)}$$
$$= C \text{ before elevating the temperature} \times (A/C \text{ after elevating the temperature}$$
$$- A/C \text{ before elevating the temperature}) \times 1.53/\text{aluminum hydroxide concentration of the}$$
$$\text{slurry before elevating the temperature} \times 100$$

wherein $A$ represents an alumina concentration (g/liter) and $C$ represents a sodium hydroxide concentration (g/liter) in the sodium aluminate solution.

The step of working the centrifugal force can be added. The centrifugal force is exerted on the slurry to concentrate the solids in the slurry and deintegrate the secondary aggregated particles by virtue of the mutual friction of the adjacent particles. This enables the secondary aggregated particles to be deintegrated further efficiently.

The centrifugal force to be exerted to the slurry at the step of working the centrifugal force in the present method is properly 300 G or more, preferably 500 G or more, and more preferably 1000 G or more. If it falls short of 300 G, the shortage will be at a disadvantage in preventing exertion of the centrifugal force large enough to deintegrate the secondary aggregated particles.

The device for exerting the centrifugal force at the step for working the central force in the method of this invention is preferred to be a continuous centrifugal separator. Use of the continuous centrifugal separator enables manifestation of an additional effect ofdeintegrating secondary aggregated particles by the shearing force exerted to the solids while the solids concentrated by the centrifugal separator are continuously raked out of the centrifugal separator.

Incidentally, the continuous centrifugal separators are known in two types, i.e. a separation plate type and a decanter type. The separation plate type comes in two types, i.e. a valve discharge type and a nozzle discharge type. The decanter type embraces a screw decanter type. As the continuous centrifugal separator for use in this invention, it is favorable to use the device of the screw decanter type because it is capable of deintegrating secondary aggregate particles by exerting the shearing force on the solids that have been concentrated by the centrifugal separator.

The present method, by using as the raw material the slurry having the aluminum hydroxide obtained by the Bayer process suspended in a sodium aluminate solution and performing the step of elevating the temperature and, when necessary, performing the step of working the centrifugal force on the slurry, is enabled to obtain a primary particle aluminum hydroxide while avoiding to roughen the surface of the particles or repressing persistence of aggregated particles.

The present invention is capable of obtaining an aluminum hydroxide having the average particle diameter $D$ in the range of 1 to 10 $\mu$m, the specific surface area $S$ of 1.5 m$^2$/g or less determined by the nitrogen adsorption method (BET method), the degree of aggregation $D/Dbet$ of less than 3, in which $Dbet$ denotes the particle diameter calculated by spherical approximation from $S$, and the content of particles having diameters exceeding 20 $\mu$m that is 0.5% or less by mass, preferably 0.1% or less by mass. Here, $Dbet$ is expressed as $Dbet = 6/(S \times \rho)$, in which $\rho$ denotes the specific gravity of aluminum hydroxide.

The present method uses as the raw material the slurry having the aluminum hydroxide obtained by the Bayer process suspended in a sodium aluminate solution as mentioned above. It is enabled, by taking into consideration the particle diameter expected to be obtained after the solution and selecting the primary particle diameter of the secondary aggregate particles in the raw material slurry, to obtain a primary particle aluminum hydroxide having a target particle diameter and a low BET specific surface area.

The aluminum hydroxide consequently obtained can be used properly as various types of filler. As concrete examples of the matrix material to be used favorably for the aluminum hydroxide-containing composition, plastic substances such as rubber or thermoplastic resin, epoxy resin and thermosetting resins (such as unsaturated polyester resin and acrylic resin) may be cited.

When the aluminum hydroxide obtained by this method is filled in a resin, it may be used either singly or in combination with several other species of aluminum hydroxide varying in particle diameter with a view to lowering the compound viscosity.

The aluminum hydroxide obtained by this method may be given a surface treatment using a known surface-treating agent prior to use. The surface-treating agent does not need to be particularly restricted. As concrete examples of the surface-treating agent which is used favorably, various coupling agents, such as silane coupling agent and titanate coupling agent; fatty acids, such as oleic acid and stearic acid; esters of such fatty acids; and silicates, such as methyl silicate and ethyl silicate, may be cited.

Now, this invention will be described more specifically below with reference to working examples. This invention does not need to be restricted to the following examples but may be embodied in any way without altering the constitution set forth in the scope of appended claims. The solid-state properties mentioned in the present specification were determined by the following methods.

<Average particle diameter $D$>

The average particle diameter $D$ of aluminum hydroxide was determined by the laser scattering diffraction method.

<BET specific surface area S>

The specific surface S of aluminum hydroxide was measured by the nitrogen adsorption method (BET method).

<Degree of aggregation $D/Dbet$>

The degree of aggregation $D/Dbet$ of aluminum hydroxide was estimated by calculating the ratio of the average particle diameter $D$ to the particle diameter $Dbet$ that is calculated by spherical approximation from $S$ as $Dbet = 6/(S \times$

ρ), in which ρ denotes the specific gravity of aluminum hydroxide,

<Content of particles having diameters exceeding 20 μm>

The content of particles having diameters exceeding 20 μm was calculated by dispersing a 5-g sample in 1.5 liters of city water passed through a filter capable of removing solids having diameters exceeding 1 μm, subjecting the resultant dispersed solution to ultrasonic wave dispersion for 10 minutes while screening it with a sieve of stainless steel having a mesh of 20 μm in an impalpable powder classifier (made by Yokohama Rika K.K. and sold under the product code of "PS-80"), weighing the residue of the screening, and computing the percentage rate of the weight of the residue of screening to the weight of the sample before the screening.

<Impact strength>

A molded piece was obtained by mixing 100 parts by mass of vinyl ester resin (made by Showa Kobunshi K.K. and sold under the trademark designation of "Ripoxy RF-300 series"), 200 parts by mass of aluminum hydroxide, 2 parts by mass of a curing agent (made by Nippon Oils & Fats Co., Ltd. and sold under the trademark designation of "Percure WO") and 0.75 part by mass of an auxiliary (made by Nippon Oils & Fats Co., Ltd. and sold under the trademark designation of "Peroil TCP") altogether, stirring them while defoaming them under vacuum, casting the resultant mixture into a gap between opposed glass plates, and heating the intervening mass of the mixture between the glass plates at 60°C for one hour and at 90°C for 30 minutes till it was solidified. A test piece containing no notch was made from the molded piece and tested for Izod impact strength.

<Ratio of solubility of aluminum hydroxide>

The ratio of solubility of aluminum hydroxide due to the step of elevating the temperature was calculated by the following formula:

$$\text{Ratio of solubility (\%)}$$
$$= C \text{ before elevating the temperature} \times (A/C \text{ after elevating the temperature}$$
$$- A/C \text{ before elevating the temperature}) \times 1.53/\text{aluminum hydroxide concentration of the}$$
$$\text{slurry before elevating the temperature} \times 100$$

wherein *A* represents an alumina concentration (g/liter) and *C* represents a sodium hydroxide concentration (g/liter) in the sodium aluminate solution.

Example 1:

Slurry resulting from suspending aluminum hydroxide obtained by the Bayer process in a sodium aluminate solution (average particle diameter of aluminum hydroxide: 57.6 μm, sodium hydroxide concentration: 158 g/liter, *A/C* = 0.31, aluminum hydroxide concentration of slurry: 200 g/liter, and slurry temperature: 41 °C) was fed to the inner tube of a double-tube heat exchanger (inner tube volume: 0.019 $m^3$, and heating surface area: 3.2 $m^2$) at a rate of 3 $m^3$/hr (retention time: 23 seconds in the heat exchanger). Steam was introduced into the outer tube till the temperature thereof was elevated to 96°C. Then, the slurry was retained at 85°C for 15 minutes. *The A/C* of the slurry was 0.49 and the ratio of solubility thereof was 21.8%.

The solid aluminum hydroxide was separated in a cleaned state from the slurry by filtration and was then dried. The aluminum hydroxide thus obtained was found to have an average particle diameter *D* of 8.2 μm, a BET specific surface area *S* of 0.5 $m^2$/g, a degree of aggregation of 1.7 and a content of particles having diameters exceeding 20 μm of 0.23% by mass. A test piece manufactured by filling this powder in resin manifested Izod impact strength of 2.2 kJ/$m^2$.

Example 2:

The same aluminum hydroxide-suspended slurry as used in Example 1 was introduced into a tank of SUS having an inner volume of 1 $m^3$ and kept stirred therein. The temperature of the tank was meanwhile elevated to 90°C over a period of 15 minutes. The slurry was found to have an *A/C* of 0.47 and a ratio of solubility of 19.3%. The solid aluminum hydroxide was separated in a cleaned state from the slurry by filtration and then dried. The aluminum hydroxide thus obtained was found to have an average particle diameter $D$ of 8.8 $\mu$m, a BET specific surface area $S$ of 0.5 m$^2$/g, a degree of aggregation of 1.8 and a content of particles having diameters exceeding 20 $\mu$m of 0.35% by mass. A test piece manufactured by filling this powder in resin manifested Izod impact strength of 2.1 kJ/m$^2$.

Example 3:

Slurry resulting from suspending aluminum hydroxide obtained by the Bayer process in a sodium aluminate solution (average particle diameter of aluminum hydroxide: 55.3 $\mu$m, sodium hydroxide concentration: 156 g/liter, $A/C$ = 0.38, aluminum hydroxide concentration of slurry: 180 g/liter, and slurry temperature: 43°C) was fed into a tank of SUS the same as used in Example 2 and kept stirred therein. The temperature of the tank was meanwhile elevated to 90°C over a period of 15 minutes. The slurry was found to have an $A/C$ of 0.48 and a ratio of solubility of 13.3%. The solid aluminum hydroxide was separated in a cleaned state from the slurry by filtration and then dried. The aluminum hydroxide thus obtained was found to have an average particle diameter $D$ of 9.1 $\mu$m, a BET specific surface area S of 0.4 m$^2$/g, a degree of aggregation of 1.5 and a content of particles having diameters exceeding 20 $\mu$m of 0.41% by mass. A test piece manufactured by filling this powder in resin manifested Izod impact strength of 2 kJ/m$^2$.

Example 4:

The same aluminum hydroxide-suspended slurry as used in Example 1 was treated in accordance with the procedure of Example 2 while heating the slurry in advance to 47°C. The slurry after elevating the temperature was found to have an $A/C$ of 0.49 and a ratio of solubility of 21.8%. The solid aluminum hydroxide was separated in a cleaned state from the slurry by filtration and then dried. The aluminum hydroxide thus obtained was found to have an average particle diameter $D$ of 9.7 $\mu$m, a BET specific surface area S of 0.4 m$^2$/g, a degree of aggregation of 1.6 and a content of particles having diameters exceeding 20 $\mu$m of 0.4% by mass. A test piece manufactured by filling this powder in resin manifested Izod impact strength of 2 kJ/m$^2$.

Comparative Example 1:

The same aluminum hydroxide-suspended slurry as used in Example 1 was introduced into the same SUS tank as used in Example 2 and kept stirred therein. The temperature of the tank was meanwhile elevated to 83°C over a period of 15 minutes. The slurry was found to have an $A/C$ of 0.44 and a ratio of solubility of 15.7%. The solid aluminum hydroxide was separated in a cleaned state from the slurry by filtration and then dried. The aluminum hydroxide thus obtained was found to have an average particle diameter $D$ of 27.2 $\mu$m, a BET specific surface area S of 0.2 m$^2$/g, a degree of aggregation of 2.2 and a content of particles having diameters exceeding 20 $\mu$m of 1.09% by mass. A test piece manufactured by filling this powder in resin manifested Izod impact strength of 1.9 kJ/m$^2$.

Comparative Example 2:

The same aluminum hydroxide-suspended slurry as used in Example 1 was introduced into the same SUS tank as used in Example 2 and kept stirred therein. The temperature of the tank was meanwhile elevated to 90°C over a period of 30 minutes. The slurry was found to have an $A/C$ of 0.5 and a ratio of solubility of 23%. The solid aluminum hydroxide was separated in a cleaned state from the slurry by filtration and then dried. The aluminum hydroxide thus obtained was found to have an average particle diameter $D$ of 12.3 $\mu$m, a BET specific surface area S of 0.4 m$^2$/g, a degree of aggregation of 2 and a content of particles having diameters exceeding 20 $\mu$m of 0.74% by mass. A test piece manufactured by filling this powder in resin manifested Izod impact strength of 1.8 kJ/m$^2$.

Comparative Example 3:

The same aluminum hydroxide-suspended slurry as used in Example 1 was treated in accordance with the procedure of Example 2 while heating the slurry in advance to 68°C. The slurry after elevating the temperature was found to have an $A/C$ of 0.49 and a ratio of solubility of 21.8%. The solid aluminum hydroxide was separated in a cleaned state from the slurry by filtration and then dried. The aluminum hydroxide thus obtained was found to have an average particle diameter $D$ of 14.5 $\mu$m, a BET specific surface area S of 0.4 m$^2$/g, a degree of aggregation of 2.3 and a content of particles having diameters exceeding 20 $\mu$m of 0.63% by mass. A test piece manufactured by filling this powder in resin manifested Izod impact strength of 1.8 kJ/m$^2$.

The results of the above Examples 1 to 4 and Comparative Examples 1 to 3 are outlined and shown collectively in Table 1.

Table 1

| | Ex. 1 | Ex. 2 | Ex. 3 | Ex. 4 | Comp. Ex. 1 | Comp. Ex. 2 | Comp. Ex. 3 |
|---|---|---|---|---|---|---|---|
| Property of aluminum hydroxide as raw material: | | | | | | | |
|     Average particle diameter ($\mu$m) | 57.6 | 57.6 | 55.3 | 57.6 | 57.6 | 57.6 | 57.6 |
| Properties of sodium aluminate solution: | | | | | | | |
|     NaOH concentration (g/liter) | 158 | 158 | 156 | 158 | 158 | 158 | 158 |
|     *A/C* | 0.31 | 0.31 | 0.38 | 0.31 | 0.31 | 0.31 | 0.31 |
| Properties of slurry: | | | | | | | |
|     Slurry concentration (g/liter) | 200 | 200 | 180 | 200 | 200 | 200 | 200 |
|     Slurry temperature (°C) | 41 | 41 | 43 | 47 | 41 | 41 | 68 |
| Conditions for elevating temperature: | | | | | | | |
|     End point (°C) thereof | 96 | 90 | 90 | 90 | 83 | 90 | 90 |
|     Duration thereof | 23s | 15m | 15m | 15m | 15m | 30m | 15m |
|     Temperature of retention (°C) | 85 | | | | | | |
|     Duration of retention | 15m | | | | | | |
|     *A/C* thereafter | 0.49 | 0.47 | 0.48 | 0.49 | 0.44 | 0.5 | 0.49 |
|     Ratio of solubility (%) | 21.8 | 19.3 | 13.3 | 21.8 | 15.7 | 23 | 21.8 |
| Properties of aluminum hydroxide: | | | | | | | |
|     Average particle diameter $D$ ($\mu$m) | 8.2 | 8.8 | 9.1 | 9.7 | 27.2 | 12.3 | 14.5 |
|     Bet specific surface area S ($m^2$/g) | 0.5 | 0.5 | 0.4 | 0.4 | 0.2 | 0.4 | 0.4 |
|     Degree of aggregation | 1.7 | 1.8 | 1.5 | 1.6 | 2.2 | 2 | 2.3 |
|     Amount of particles, +20$\mu$ (wt%) | 0.23 | 0.35 | 0.41 | 0.4 | 1.09 | 0.74 | 0.63 |
| Property of molded piece: | | | | | | | |
|     Izod impact strength (kJ/$m^2$) | 2.2 | 2.1 | 2 | 2 | 1.9 | 1.8 | 1.8 |

Example 5:

Slurry resulting from suspending aluminum hydroxide obtained by the Bayer process in a sodium aluminate solution (average particle diameter of aluminum hydroxide: 57.6 $\mu$m, sodium hydroxide concentration: 158 g/liter, *A/C* = 0.31, aluminum hydroxide concentration of slurry: 200 g/liter, and slurry temperature 41 °C) was fed to the inner tube of a double-tube heat exchanger (inner tube volume: 0.019 $m^3$ and heating surface area: 3.2 $m^2$) at a rate of 3 $m^3$/hr (retention time: 23 seconds in the heat exchanger). Steam was introduced into the outer tube till the temperature thereof was elevated to 96°C. Then, part of the slurry was transferred at a rate of 1 $m^3$/hr to a continuous centrifugal separator made by Tomoe Kogyo K.K. and sold under the trademark designation of "Sharpless Super Decanter P-660" and compressed by the centrifugal force of 1000 G to concentrate the solids therein. The solids concentrated by a screw mounted on the inner wall of the continuous centrifugal separator were continuously taken out of the device.

The *A/C* of the slurry that had passed the double-tube heat exchanger was 0.46 and the ratio of solubility of the aluminum hydroxide by virtue of the step of elevating the temperature of the slurry was 18.1%. The aluminum hydroxide that had passed the decanter was washed, separated by filtration and then dried.

The aluminum hydroxide consequently obtained was found to have an average particle diameter $D$ of 8.9 $\mu$m, a BET specific surface area S of 0.5 $m^2$/g, a degree of aggregation $D/Dbet$ of 1.8 and a content of particles having diameters exceeding 20 $\mu$m of 0.03% by mass.

A test piece manufactured by filling this powder in resin manifested Izod impact strength of 2.6 kJ/$m^2$.

Example 6:

Slurry resulting from suspending aluminum hydroxide obtained by the Bayer process in a sodium aluminate solution (average particle diameter of aluminum hydroxide: 55.3 $\mu$m, sodium hydroxide concentration: 156 g/liter, *A/C* = 0.38, aluminum hydroxide concentration of slurry: 180 g/liter, and slurry temperature: 43°C) was forwarded at a rate

of 3 m$^3$/hr (retention time: 23 seconds in the heat exchanger) to the inner tube of the same double-tube heat exchange as used in Example 5 and steam was introduced to the outer tube till the temperature was elevated to 96°C. Part of the slurry was forwarded at a rate of 1 m$^3$/hr to the same continuous centrifugal separator as used in Example 5, compressed with the centrifugal force of 1000 G to concentrate the solids in the slurry. The solids were taken out of the device by following the procedure of Example 5.

The slurry that had passed the double-tube heat exchanger was found to have an *AIC* of 0.45 and a ratio of solubility of the aluminum hydroxide due to the step of elevating the temperature of the slurry was 9.3%. The aluminum hydroxide that had passed the decanter was washed, separated by screening and then dried.

The aluminum hydroxide consequently obtained was found to have an average paraticle diameter *D* of 7.8 μm, a BET specific surface area S of 0.9 m$^2$/g, a degree of aggregation *DIDbet* of 2.8 and a content of particles having diameters exceeding 20 μm of 0.05% by mass.

A test piece was manufactured by filling the aluminum hydroxide powder in resin by following the procedure of Example 5. The test piece was found to have Izod impact strength of 3.1 kJ/m$^2$.

Example 7:

Part of the slurry which had passed the double-tube heat exchanger of Example 5 was forwarded at a rate of 1 m$^3$/hr to the same continuous centrifugal separator as used in Example 6 and compressed by the centrifugal force of 500 G to concentrate the solids in the slurry. The solids were taken out of the device in the same manner as in Example 6. The aluminum hydroxide that had passed the decanter was washed, separated by screening and then dried.

The aluminum hydroxide consequently obtained was found to have an average particle diameter *D* of 9.3 μm, a BET specific surface area *S* of 0.5 m$^2$/g, a degree of aggregation *DIDbet* of 1.9 and a content of particles having diameters exceeding 20 μm of 0.04% by mass.

A test piece was manufactured by filling the aluminum hydroxide powder in resin by following the procedure of Example 5. The test piece was found to have Izod impact strength of 2.7 kJ/m$^2$.

Example 8:

The slurry of Example 5 was treated in accordance with the procedure of Example 5 while having the slurry heated in advance to 47°C. The *AIC* of the slurry that had passed the double-tube heat exchanger was 0.45 and the ratio of solubility was 16.9%. The aluminum hydroxide that had passed the decanter was washed, separated by filtration and then dried.

The aluminum hydroxide consequently obtained was found to have an average particle diameter *D* of 9.5 μm, a BET specific surface area S of 0.4 m$^2$/g, a degree of aggregation *DIDbet* of 1.5 and a content of particles having diameters exceeding 20 μm of 0.08% by mass.

A test piece was manufactured by filling the aluminum hydroxide powder in resin by following the procedure of Example 1. The test piece was found to have Izod impact strength of 2.9 kJ/m$^2$.

Example 9:

Part of the slurry which had passed the double-tube heat exchanger of Example 5 was forwarded at a rate of 1 m$^3$/hr to the same continuous centrifugal separator as used in Example 5 and compressed with the centrifugal force of 200 G to concentrate the solids in the slurry. The solids were taken out of the device in the same manner as in Example 5. The aluminum hydroxide that had passed the decanter was washed, separated by filtration and then dried.

The aluminum hydroxide consequently obtained was found to have an average particle diameter *D* of 9.6 μm, a BET specific surface area S of 0.3 m$^2$/g, a degree of aggregation *DIDbet* of 1.2 and a content of particles having diameters exceeding 20 μm of 0.15% by mass.

A test piece was manufactured by filling the aluminum hydroxide powder in resin by following the procedure of Example 5. The test piece was found to have Izod impact strength of 2 kJ/m$^2$.

Comparative Example 4:

The same aluminum hydroxide slurry as used in Example 5 was forwarded at a rate of 3 m$^3$/hr to the inner tube of the same double-tube heat exchanger as used in Example 5 (retention time: 23 seconds in the heat exchanger) and meanwhile steam was introduced into the outer tube to elevate the temperature of the slurry to 87°C. Part of the slurry was forwarded at a rate of 1 m$^3$/hr to the same continuous centrifugal separator as used in Example 5 and compressed by the centrifugal force of 1000 G to concentrate the solids in the slurry, The solids were taken out of the device in the same manner as in Example 5.

The $A/C$ of the slurry that had passed the double-tube heat exchanger was 0.4 and the ratio of solubility of the aluminum hydroxide due to the step of elevating the temperature of the slurry was 10.9%. The aluminum hydroxide that had passed the decanter was washed, separated by filtration and then dried.

The aluminum hydroxide consequently obtained was found to have an average particle diameter $D$ of 14 $\mu$m, a BET specific surface area S of 0.3 m²/g, a degree of aggregation $D/Dbet$ of 1.7 and a content of particles having diameters exceeding 20 $\mu$m of 0.73% by mass.

A test piece was manufactured by filling the aluminum hydroxide powder in resin by following the procedure of Example 1. The test piece was found to have Izod impact strength of 1.9 kJ/m².

Comparative Example 5:

Aluminum hydroxide slurry obtained by the Bayer process (average particle diameter of aluminum hydroxide: 56.5 $\mu$m, sodium hydroxide concentration: 159 g/liter, $A/C$ = 0.45, aluminum hydroxide concentration of slurry: 200 g/liter, and slurry temperature 45°C) was forwarded at a rate of 3 m³/hr to the inner tube of the same double-tube heat exchanger as used in Example 5 (retention time: 23 seconds in the heat exchanger) and steam was meanwhile introduced into the outer tube to elevate the temperature of the slurry to 96°C. Part of the slurry was forwarded at a rate of 1 m³/hr to the same continuous centrifugal separator as used in Example 5 and compressed by the centrifugal force of 1000 G to concentrate the solids in the slurry. The solids were taken out of the device in the same manner as in Example 5.

The $A/C$ of the slurry that had passed the double-tube heat exchanger was 0.47 and the ratio of solubility of the aluminum hydroxide due to the step of elevating the temperature of the slurry was 2.4%. The aluminum hydroxide that had passed the decanter was washed, separated by filtration and then dried.

The aluminum hydroxide consequently obtained was found to have an average particle diameter $D$ of 30.4 $\mu$m, a BET specific surface area S of 0.2 m²/g, a degree of aggregation $D/Dbet$ of 2.5 and a content of particles having diameters exceeding 20 $\mu$m of 1.26% by mass.

A test piece was manufactured by filling the aluminum hydroxide powder in resin by following the procedure of Example 5. The test piece was found to have Izod impact strength of 1.8 kJ/m².

Comparative Example 6:

The slurry of Example 5 was treated in accordance with the procedure of Example 5 while having the slurry heated in advance to 65°C. The $A/C$ of the slurry that had passed the double-tube heat exchanger was 0.46 and the ratio of solubility was 18.1%. The aluminum hydroxide that had passed the decanter was washed, separated by filtration and then dried.

The aluminum hydroxide consequently obtained was found to have an average particle diameter $D$ of 10.6 $\mu$m, a BET specific surface area S of 0.5 m²/g, a degree of aggregation $D/Dbet$ of 2.1 and a content of particles having diameters exceeding 20 $\mu$m of 0.22% by mass.

A test piece was manufactured by filling the aluminum hydroxide powder in resin by following the procedure of Example 1. The test piece was found to have Izod impact strength of 2.2 kJ/m².

The results of Examples 5 to 9 and Comparative Examples 4 to 6 are outlined and shown collectively in Table 2.

Table 2

| | Ex. 5 | Ex. 6 | Ex. 7 | Ex. 8 | Ex. 9 | Comp. Ex. 4 | Comp. Ex. 5 | Comp. Ex 6 |
|---|---|---|---|---|---|---|---|---|
| Property of aluminum hydroxide as raw material: Average particle diameter ($\mu$m) | 57.6 | 55.3 | 57.6 | 57.6 | 57.6 | 57.6 | 56.5 | 57.6 . |
| Properties of sodium aluminate solution: NaOH concentration (g/liter) | 158 | 156 | 158 | 158 | 158 | 158 | 159 | 158 |
| $A/C$ | 0.31 | 0.3 8 | 0.31 | 0.31 | 0.31 | 0.31 | 0.45 | 0.31 |
| Properties of slurry: Slurry concentration (g/liter) | 200 | 180 | 200 | 200 | 200 | 200 | 200 | 200 |
| Slurry temperature (°C) | 41 | 43 | 41 | 47 | 41 | 41 | 45 | 65 |

(continued)

| Conditions of elevating temperature: | | | | | | | | |
|---|---|---|---|---|---|---|---|---|
| End point (°C) thereof | 96 | 96 | 96 | 96 | 96 | 87 | 96 | 96 |
| Duration thereof (sec) | 23 | 23 | 23 | 23 | 23 | 23 | 23 | 23 |
| *A/C* thereafter | 0.46 | 0.45 | 0.46 | 0.45 | 0.46 | 0.4 | 0.47 | 0.46 |
| Ratio of solubility (%) | 18.1 | 9.3 | 18.1 | 16..9 | 18.1 | 10.9 | 2.4 | 18.1 |
| Condition of centrifugal separation: | | | | | | | | |
| Centrifugal force (G) | 1000 | 1000 | 500 | 1000 | 200 | 1000 | 1000 | 1000 |
| Properties of aluminum hydroxide separated by filtration: | | | | | | | | |
| Average particle diameter $D(\mu m)$ | 8.9 | 7.8 | 9.3 | 9.5 | 9.6 | 14 | 30.4 | 10.6 |
| Bet specific surface area $S$ $(m^2/g)$ | 0.5 | 0.9 | 0.5 | 0.4 | 0.3 | 0.3 | 0.2 | 0.5 |
| Degree of aggregation | 1.8 | 2.8 | 1.9 | 1.5 | 1.2 | 1.7 | 2.5 | 2.1 |
| Amount of particles, $+20\mu m$ (wt%) | 0.03 | 0.05 | | 0.08 | 0.15 | 0.73 | 1.26 | 0.22 |
| Property of molded piece: Izod impact strength $(kJ/m^2)$ | 2.6 | 3.1 | 2.7 | 2.9 | 2 | 1.9 | 1.8 | 2.2 |

Industrial Applicability: -

As described in the foregoing, in the method of this invention for the production of aluminum hydroxide, thermal shock is exerted to aluminum hydroxide in slurry, thereby selectively dissolving only the grain boundaries of second aggregated particles crystallographically deficient in binding force, and centrifugal force is exerted thereto when necessary, thereby bringing the secondary aggregated particles into strong mutual contact, to manifest an effect of deintegrating the secondary aggregated particles.

Unlike the conventional method for production that combines a dry sieve or an air classifier with a method of pulverization utilizing the physical impact force due to the collision between media or a method of pulverization utilizing the attrition pulverization as with a Reymond mill or the interparticle collision as with a jet mill, the method of this invention for the production of aluminum hydroxide manifests an epochal capacity of producing aluminum hydroxide of a primary particle extremely destitute of residual aggregated particles and enjoys a very large commercial value.

Further, the aluminum hydroxide that is obtained by the method mentioned above can be extensively used as various types of filler to be filled in rubber and plastic. It is possible to form a molded piece of high impact strength without encountering such degradation of impact strength as experienced by the conventional aluminum hydroxide filler.

**Claims**

1. A method for the production of aluminum hydroxide, comprising the step of suspending aluminum hydroxide obtained by the Bayer process in a sodium aluminate solution to obtain a slurry which has a ratio *A/C* of 0.4 or less, wherein *A* represents an alumina concentration (g/liter) and *C* represents a sodium hydroxide concentration (g/liter) in the sodium aluminate solution, and the step of elevating a temperature of the slurry from 60°C or less to 90°C or more, wherein in the step of elevating the temperature, a time H taken to elevate the temperature of the slurry from 60°C or less to 90°C or more is 15 minutes or less.

2. The method for the production of aluminum hydroxide according to claim 1, further comprising the step of retaining the slurry, after the step of elevating the temperature of the slurry, at a temperature of 85°C or more for at least (15 - H) minutes.

3. The method for the production of aluminum hydroxide according to claim 1 or 2, further comprising the step of exerting centrifugal force to the slurry after the step of elevating the temperature of the slurry.

4. The method for the production of aluminum hydroxide according to any one of claims 1 to 3, wherein the aluminum hydroxide has a ratio of solubility, due to the step of elevating the temperature, represented by the general formula: ratio of solubility (%) $C$ before elevating the temperature x ($A/C$ after elevating the temperature - $A/C$ before elevating the temperature) x 1.53/aluminum hydroxide concentration of the slurry before elevating the temperature x 100, wherein $A$ represents an alumina concentration (g/liter) and $C$ represents a sodium hydroxide concentration (g/liter) in the sodium aluminate solution, which ratio is less than 30%.

5. The method for the production of aluminum hydroxide according to claim 3 or claim 4, wherein the centrifugal force is 300 G or more.

6. The method for the production of aluminum hydroxide according to any one of claims 3 to 5, wherein the centrifugal force is exerted with a continuous centrifugal separator.

7. The method for the production of aluminum hydroxide according to any one of claims 1 to 6, wherein the step of elevating the temperature of the slurry is carried out using a double-tube heat exchanger.

**Patentansprüche**

1. Verfahren zur Herstellung von Aluminiumhydroxid, welches die Stufe, in der durch das Bayer-Verfahren erhaltene Aluminiumhydroxid in einer Natriumaluminatlösung suspendiert wird, wobei eine Aufschlämmung erhalten wird, die ein Verhältnis A/C von 0,4 oder weniger aufweist, wobei A die Aluminiumoxidkonzentration (g/Liter) und C die Natriumhydroxidkonzentration (g/Liter) in der Natriumaluminatlösung darstellt, und die Stufe umfaßt, bei der die Temperatur der Aufschlämmung von 60°C oder weniger auf 90°C oder mehr erhöht wird, wobei in der Stufe, in der die Temperatur erhöht wird, die zum Erhöhen der Temperatur der Aufschlämmung von 60°C oder weniger auf 90°C oder mehr eingesetzte Zeit H 15 Minuten oder weniger ist.

2. Verfahren zum Herstellen von Aluminiumhydroxid nach Anspruch 1, welches außerdem die Stufe umfasst, bei der die Aufschlämmung nach der Stufe, in der die Temperatur der Aufschlämmung erhöht wird, mindestens (15-H) Minuten bei einer Temperatur von 85°C oder höher gehalten wird.

3. Verfahren zum Herstellen von Aluminiumhydroxid nach Anspruch 1 oder 2, das außerdem die Stufe umfasst, in der auf die Aufschlämmung nach der Stufe, in der die Temperatur der Aufschlämmung erhöht wird, eine Zentrifugalkraft ausgeübt wird.

4. Verfahren zum Herstellen von Aluminiumhydroxid nach einem der Ansprüche 1 bis 3, wobei das Aluminiumhydroxid einen auf die Temperaturerhöhungsstufe zurückzuführenden Löslichkeitsanteil gemäß der folgenden allgemeinen Formel aufweist: Löslichkeitsanteil (%) = C vor dem Erhöhen der Temperatur x (A/C nach dem Erhöhen der Temperatur - A/C vor dem Erhöhen der Temperatur) x 1,53/Aluminiumhydroxidkonzentration der Aufschlämmung vor dem Erhöhen der Temperatur x 100, wobei A die Aluminiumoxidkonzentration (g/Liter) und C die Natriumhydroxidkonzentration (g/Liter) in der Natriumaluminatlösung darstellt, wobei der Löslichkeitsanteil weniger als 30% ist.

5. Verfahren zum Herstellen von Aluminiumhydroxid nach Anspruch 3 oder Anspruch 4, wobei die Zentrifugalkraft 300 G oder mehr ist.

6. Verfahren zum Herstellen von Aluminiumhydroxid nach einem der Ansprüche 3 bis 5, wobei die Zentrifugalkraft mit einem kontinuierlichen Zentrifugalseparator ausgeübt wird.

7. Verfahren zum Herstellen von Aluminiumhydroxid nach einem der Ansprüche 1 bis 6, wobei die Stufe, in der die Temperatur der Aufschlämmung erhöht wird, unter Einsatz eines Koaxialröhrenwärmetauschers durchgeführt wird.

**Revendications**

1. Procédé de production d'hydroxyde d'aluminium, comprenant les étapes de suspension d'hydroxyde d'aluminium obtenu par le procédé Bayer dans une solution d'aluminate de sodium pour obtenir une suspension épaisse qui présente un rapport $A/C$ de 0,4 ou moins, dans lequel $A$ représente une concentration en alumine (g/litre) et $C$ représente une concentration en hydroxyde de sodium (g/litre) dans la solution d'aluminate de sodium et l'étape d'élévation d'une température de la suspension épaisse de 60 °C ou moins à 90 °C ou plus, dans lequel dans l'étape d'élévation de température, une durée H prise pour élever la température de la suspension épaisse de 60 °C ou moins à 90 °C ou plus est de 15 minutes ou moins.

2. Procédé de production d'hydroxyde d'aluminium selon la revendication 1, comprenant en outre l'étape de conservation de la suspension épaisse, après l'étape d'élévation de la température de la suspension épaisse, à une température de 85 °C ou plus pendant au moins (15 - H) minutes.

3. Procédé de production d'hydroxyde d'aluminium selon la revendication 1 ou 2, comprenant en outre l'étape d'application d'une force centrifuge à la suspension épaisse après l'étape d'élévation de la température de la suspension épaisse.

4. Procédé de production d'hydroxyde d'aluminium selon l'une quelconque des revendications 1 à 3, dans lequel l'hydroxyde d'aluminium présente un rapport de solubilité, en raison de l'étape d'élévation de la température, représenté par la formule générale : rapport de solubilité (%) = $C$ avant élévation de la température x ($A/C$ après élévation de la température - $A/C$ avant élévation de la température) x 1,53/concentration en hydroxyde d'aluminium de la suspension épaisse avant élévation de la température x 100, dans laquelle $A$ représente une concentration en alumine (g/litre) et $C$ représente une concentration en hydroxyde de sodium (g/litre) dans la solution d'aluminate de sodium, lequel rapport est inférieur à 30 %.

5. Procédé de production d'hydroxyde d'aluminium selon la revendication 3 ou la revendication 4, dans lequel la force centrifuge est de 300 G ou plus.

6. Procédé de production d'hydroxyde d'aluminium selon l'une quelconque des revendications 3 à 5, dans lequel la force centrifuge est appliquée avec un séparateur centrifuge continu.

7. Procédé de production d'hydroxyde d'aluminium selon l'une quelconque des revendications 1 à 6, dans lequel l'étape d'élévation de la température de la suspension épaisse est réalisée en utilisant un échangeur de chaleur à double tube.

**REFERENCES CITED IN THE DESCRIPTION**

**Patent documents cited in the description**

- JP HEI54336 B
- JP SHO629256 B
- JP HEI9208740 A
- JP 5058623 B
- US 5130113 A